# EUROPÄISCHE PATENTSCHRIFT

(11) **EP 2 838 139 B1**
(45) Veröffentlichungstag und Bekanntmachung des Hinweises auf die Patenterteilung: **11.01.2017**
(21) Anmeldenummer: 13180122.7
(22) Anmeldetag: 12.08.2013
(51) Int. Cl.: H01M 4/04, H01M 4/36, H01M 4/38, H01M 4/587, H01M 4/62, H01M 4/1393, H01M 4/1395, H01M 10/052

(54) **Elektrochemisches Aktivmaterial und seine Herstellung**
Electrochemical active material and its preparation
Matériau actif électrochimique et sa fabrication

(43) Veröffentlichungstag der Anmeldung: 18.02.2015
(73) Patentinhaber: VARTA Micro Innovation GmbH, 8010 Graz (AT)
(72) Erfinder: Scharfegger, Michaela, 8010 Graz (AT); Toulis, Stephania, 8712 Proleb (AT); Kren, Dr. Harald, 8042 Graz (AT); Koller, Dr. Stefan, 8010 Graz (AT)
(74) Vertreter: Patentanwaltskanzlei Cartagena

(56) Entgegenhaltungen:
- EP-A1- 2 573 845
- EP-A1- 2 579 365
- JP-A- 2002 141 062
- US-A1- 2005 136 330

## Beschreibung

Die vorliegende Erfindung betrifft ein Verfahren zur Herstellung von Aktivmaterial für die Elektrode einer elektrochemischen Zelle. Weiterhin betrifft sie nach dem Verfahren hergestelltes Aktivmaterial sowie Elektroden und elektrochemische Zellen mit einem solchen Aktivmaterial.

Der Begriff "Batterie" meinte ursprünglich mehrere in Serie geschaltete elektrochemische Zellen in einem Gehäuse. Heute werden jedoch auch einzelne elektrochemische Zellen häufig als Batterie bezeichnet. Bei der Entladung einer elektrochemischen Zelle findet eine energieliefernde chemische Reaktion statt, welche sich aus zwei elektrisch miteinander gekoppelten, aber räumlich voneinander getrennten Teilreaktionen zusammensetzt. Eine bei vergleichsweise niedrigerem Redoxpotenzial stattfindende Teilreaktion läuft an der negativen Elektrode ab, eine bei vergleichsweise höherem Redoxpotenzial an der positiven Elektrode. Bei der Entladung werden an der negativen Elektrode durch einen Oxidationsprozess Elektronen freigesetzt, resultierend in einem Elektronen-strom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser lonenstrom wird durch einen ionisch leitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische umzukehren. Werden in diesem Zusammenhang die Begriffe "Anode" und "Kathode" benutzt, benennt man die Elektroden in der Regel entsprechend ihrer Entladefunktion. Die negative Elektrode in solchen Zellen ist also die Anode, die positive Elektrode die Kathode.

Unter den sekundären Zellen und Batterien werden vergleichsweise hohe Energiedichten von Zellen und Batterien auf Basis von Lithium-Ionen erreicht. Diese weisen in der Regel sogenannte Kompositelektroden auf, die neben elektrochemisch aktiven Komponenten auch elektrochemisch inaktive Komponenten umfassen. Als elektrochemisch aktive Komponenten (oft auch als elektrochemisches Aktivmaterial oder kurz, Aktiv-material, bezeichnet) für Zellen und Batterien auf Basis von Lithium-Ionen kommen grundsätzlich sämtliche Materialien in Frage, die Lithiumionen aufnehmen und wieder abgeben können. Stand der Technik sind diesbezüglich für die negative Elektrode insbesondere Partikel auf Kohlenstoffbasis wie graphitischer Kohlenstoff oder zur Interkalation von Lithium befähigte nicht-graphitische Kohlenstoffmaterialien. Weiterhin können auch metallische und halbmetallische Materialien zum Einsatz kommen, die mit Lithium legierbar sind. So sind beispielsweise die Elemente Zinn, Antimon und Silizium in der Lage, mit Lithium intermetallische Phasen zu bilden. Für die positive Elektrode umfassen die zu diesem Zeitpunkt industriell verwendeten Aktivmaterialien vor allem Lithiumkobaltoxid (LiCoO₂), LiMn₂O₄-Spinell, Lithiumeisenphosphat (LiFePO₄) und Derivate wie beispielsweise LiNi_{1/3}Mn_{1/3}CO_{1/3}O₂ oder LiMnPO₄. Sämtliche elektrochemisch aktiven Materialien sind in der Regel in Partikelform in den Elektroden enthalten.

Als elektrochemisch inaktive Komponenten sind an erster Stelle Elektrodenbinder und Stromableiter zu nennen. Über Stromableiter werden Elektronen den Elektroden zu- oder abgeführt. Elektrodenbinder sorgen für die mechanische Stabilität der Elektroden sowie für die Kontaktierung der Partikel aus elektrochemisch aktivem Material untereinander und zum Stromableiter. Zu einer verbesserten elektrischen Anbindung der elektrochemisch aktiven Partikel an den Stromableiter können leitfähigkeitsverbessernde Additive beitragen, die ebenfalls unter den Sammelbegriff "elektrochemisch inaktive Komponenten" zu subsumieren sind. Sämtliche elektrochemisch inaktive Komponenten sollten zumindest im Potenzialbereich der jeweiligen Elektrode elektrochemisch stabil sein und einen chemisch inerten Charakter gegenüber gängigen Elektrolytlösungen aufweisen. Gängige Elektrolytlösungen sind z.B. Lösungen von Lithiumsalzen wie Lithiumhexafluorophosphat in organischen Lösungsmitteln wie Ether und Ester der Kohlensäure.

Aus der WO 2010/014966 A1 ist ein Aktivmaterial für Elektroden von Lithium-Ionen-Batterien bekannt, das nanoskalige Siliziumpartikel enthält. Diese sind in einen Polymerelektrolyten eingebettet, gegebenenfalls zusammen mit Kohlenstoffpartikeln. Der Polymerelektrolyt ist in der Lage, Volumenschwankungen der Silizium- und gegebenenfalls der Kohlenstoffpartikel bei Lade- und Entladevorgängen auszugleichen.

Auch Kompositmaterialien aus Graphit und Silizium sind bereits bekannt. So ist beispielsweise in der DE 10 2008 063 552 A1 ein Aktivmaterial mit einer Kern-Hülle-Struktur offenbart. Der Kern besteht dabei aus einem Graphitpartikel, die Hülle aus metallischem Silizium, das durch thermische Zersetzung eines Silans gebildet werden kann. Aus der US 2006/0035149 A1 ist ein Aktivmaterial bekannt, das neben Silizium-Kohlenstoff-Kompositpartikeln auch Kohlenstofffasern aufweisen kann. Und aus der US 6,589,696 B2 ist ein Aktivmaterial bekannt, das Graphitpartikel umfasst, auf deren Oberfläche mikropartikuläre Siliziumpartikel angeordnet sind, welche in einen amorphen Kohlenstofffilm eingebunden sind.

Aus der US 2005/0136330 A1 und der US 2009/0252864 A1 sind Aktivmaterialien für Lithium-Ionen-Batterien bekannt, die Silizium-Kohlenstoff-Kompositpartikel aufweisen. Letztere werden hergestellt, indem Siliziumpartikel mit einem Beschichtungsmaterial aus der Gruppe mit Petroleum, Teer, Phenolharzen, Zuckern, Polyacrylonitril und Lignin beschichtet werden, gefolgt von einer Pyrolyse des Zersetzungsmaterials.

Aus der EP 2579365 A1 ist ein Aktivmaterial für Lithiumbatterien beschrieben, das sich aus Partikeln zusammensetzt, die einen kristallinen Kohlenstoffkern aufweisen, auf dessen Oberfläche nanoskalige Siliziumfäden abgeschieden sind. Diese sind in eine Matrix aus einem amorphen Kohlenstoffmaterial eingebettet.

Aus der JP 2002141062 A ist ein Graphit-Kohlenstoff-Komplexmaterial bekannt, das als Aktivmaterial für sekundäre Lithiumbatterien Verwendung finden kann. Silizium findet als Aktivmaterial in dieser Druckschrift keine Erwähnung.

Von Bedeutung für die Performance von sekundären Lithium-Ionen-Zellen ist die Tatsache, dass sich bereits beim ersten Lade-/ Entladezyklus solcher Zellen (der sogenannten Formierung) auf der Oberfläche der elektrochemisch aktiven Materialien in der Anode eine Deckschicht ausbildet, die in der Regel aus Elektrolytzersetzungsprodukten und oxidiertem Lithium besteht. Bezeichnet wird diese Deckschicht als "solid electrolyte interface" (SEI). Die SEI ist im Idealfall nur noch für die extrem kleinen Lithiumionen permeabel und unterbindet einen weiteren direkten Kontakt der Elektrolytlösung mit dem elektrochemisch aktiven Material in der Anode. Insofern hat die Bildung der SEI durchaus positive Effekte. Nachteilig ist allerdings, dass bei der Bildung der SEI Lithium verloren geht und gleichzeitig auch der Innenwiderstand der Zelle ansteigt.

Aus der EP 2573845 A1 ist ein Verfahren zur Herstellung eines Aktivmaterials für Elektroden bekannt, aus dem Lithium interkalierende Kohlenstoffpartikel resultieren, die hüllenartig von einer amorphen Kohlenstoffschicht überzogen sind, in die die Siliziumpartikel eingebettet sind. Diese lassen sich als Aktivmaterial für die Elektroden von elektrochemischen Zellen verwenden und zeichnen sich als solches durch eine sehr hohe Zyklenstabilität aus. Die amorphe Kohlenstoffschicht hemmt den Kontakt der Siliziumpartikel und der Lithium interkalierenden Kohlenstoffpartikel mit dem Elektrolyten der Zellen und verhindert dadurch übergroße Verluste an Lithium, wie sie bei der beschriebenen SEI-Bildung auftreten können. Im Unterschied zu dem in der US 6,589,696 B2 beschriebenen Verfahren werden hier sehr viel kleinere, nanoskalige Siliziumpartikel eingesetzt.

Der vorliegenden Erfindung lag die Aufgabe zugrunde, die bereits bekannten Aktivmaterialien für Elektroden, insbesondere Kompositmaterialien aus Graphit und Silizium, weiter zu verbessern.

Diese Aufgabe wird gelöst durch das Verfahren mit den Merkmalen des Anspruchs 1. Bevorzugte Ausführungsformen des erfindungsgemäßen Verfahrens sind in den abhängigen Ansprüchen 2 bis 10 angegeben.

Das erfindungsgemäße Verfahren dient der Herstellung von Aktivmaterial für Elektroden von elektrochemischen Zellen, insbesondere von Zellen auf Basis von Lithium-Ionen-Technologie, also von Material, das im Rahmen der eingangs beschriebenen Lade- und Entladevorgänge Lithium-Ionen ein- oder auslagert oder mit Lithium legiert. Es umfasst stets die folgenden Schritte:
- Einen **Aufbauschritt A,** in dem ein pulverförmiges Komposit aus Lithium interkalierenden Kohlenstoffpartikeln (Komponente 1), Silizium-partikeln (Komponente 2) und einem zu amorphem Kohlenstoff pyrolisierbaren Polymer (Komponente 3) gebildet wird.
- Einen **Pyrolyseschritt B,** in dem das in Schritt A gebildete Komposit unter Ausschluß von Luftsauerstoff bei einer Temperatur wärmebehandelt wird, bei der sich das pyrolisierbare Polymer unter Bildung von amorphem Kohlenstoff zersetzt.

In Schritt A werden zur Bildung des Komposits bevorzugt Lithium interkalierende Kohlenstoffpartikel eingesetzt, die eine mittlere Partikelgröße zwischen 3 µm und 60 µm aufweisen. Innerhalb dieses Bereiches sind mittlere Partikelgrößen zwischen 10 µm und 30 µm weiter bevorzugt. Zur Interkalation von Lithium befähigte Kohlenstoffmaterialien wurden eingangs erwähnt. Besonders bevorzugt handelt es sich bei den verwendeten Kohlenstoffpartikeln um Partikel mit Graphitstruktur.

Bevorzugt weisen die verwendeten Lithium interkalierenden Kohlenstoffpartikel eine weitestgehend einheitliche Größe auf. Die Spanne der Partikelgrößenverteilung liegt bevorzugt zwischen 0,1 und 3, insbesondere zwischen 0,5 und 2,0, besonders bevorzugt zwischen 0,75 und 1,25. Bestimmen lässt sie sich über die Formel (d90-d10)/d50, in welcher der d50-Wert die mittlere Partikelgröße repräsentiert und die Differenz d90-d10 die Breite der Partikelgrößenverteilung darstellt. Zur Erläuterung: Ein d90-Wert von 30 µm besagt z.B., dass 90 % der Partikel einer Verteilung eine Größe von 30 µm oder weniger aufweisen, ein d10-Wert von 20 µm besagt, dass 10 % der Partikel einer Verteilung eine Größe von 20 µm oder weniger aufweisen. Hieraus lässt sich eine Breite der Partikelgrößenverteilung von 10 µm errechnen. Liegt die mittlere Partikelgröße d50 der Verteilung bei z.B. 25 µm, so ergibt sich hieraus eine Spanne der Partikelgrößenverteilung von 0,4.

Die in Schritt A zur Bildung des Komposits eingesetzten Siliziumpartikel sind bevorzugt nanoskalig, sie weisen bevorzugt eine mittlere Partikelgröße zwischen 30 nm und 300 nm auf. Innerhalb dieses Bereiches sind mittlere Partikelgrößen zwischen 50 nm und 200 nm, insbesondere zwischen 80 nm und 150 nm, weiter bevorzugt.

Bevorzugt weisen auch die verwendeten Siliziumpartikel eine weitestgehend einheitliche Größe auf. Die Spanne der Partikelgrößenverteilung liegt bevorzugt zwischen 0,1 und 3, insbesondere zwischen 0,5 und 2,0.

Zu beachten ist, dass an Stelle von Siliziumpartikeln grundsätzlich auch andere zur Legierung mit Lithium befähigte Metall- oder Halbmetallpartikel verwendet werden können, beispielsweise Partikel aus Zinn, Germanium, Aluminium oder Antimon. Des Weiteren können Mischungen und/ oder Legierungen der genannten Materialien verwendet werden.

Das zu amorphem Kohlenstoff pyrolisierbare Polymer ist bevorzugt ausgewählt aus der Gruppe mit Epoxidharz, Polyurethanharz und Polyesterharz. Alle diese Materialien lassen sich im Kontakt mit den nanoskaligen Siliziumpartikeln bei ausreichend hohen Temperaturen zersetzen, ohne dass es zu einer übermäßigen Oxidation des eingesetzten Siliziums kommt.

Besonders bevorzugt wird als Komponente 3 ein Epoxidharz verwendet, insbesondere ein Epoxidharz auf Basis von Bisphenol A und Epichlorhydrin. Beide Stoffe sind dem Fachmann als Ausgangsmaterialien von Epoxidharzen hinlänglich bekannt und müssen im Rahmen der vorliegenden Erfindung nicht näher erläutert werden.

Besonders zeichnet sich das erfindungsgemäße Verfahren dadurch aus, dass zur Bildung des Komposits die Lithium interkalierenden Kohlenstoffpartikel in dem Aufbauschritt in einen Wirbelschichtreaktor überführt und in diesem mit einer Hülle aus dem Polymer sowie den Siliziumpartikeln überzogen werden, die zu diesem Zwecke ebenfalls in den Reaktor eingespeist werden. Das Komposit wird dabei unmittelbar in Pulverform erhalten, im Gegensatz zu aus dem Stand der Technik bekannten Verfahren, gemäß denen das gewonnene Komposit - insbesondere vor dem Pyrolyseschritt B - durch entsprechende mechanische Behandlung erst in Pulverform überführt werden muss.

Die einzelnen Partikel des Komposit-Pulvers umfassen jeweils Lithium interkalierende Kohlenstoffpartikel, die hüllenartig von einer Schicht aus dem pyrolisierbaren Polymer überzogen sind, in welche die Siliziumpartikel eingebettet sind.

Es ist möglich, dass das Komposit, zusätzlich zu den Komponenten 1 bis 3, als Komponente 4 amorphen Leitruß, Graphene und/oder Kohlenstoff-Nanoröhrchen (CNTs) aufweist.

Zur Herstellung des pulverförmigen Komposits werden die Lithium interkalierenden Kohlenstoffpartikel bevorzugt in eine Auftriebszone des Wirbelschichtreaktors eingespeist, wo sie mittels eines aufwärts strömenden Trägergases in einen fluidisierten Zustand versetzt werden und eine Wirbelschicht bilden. Bei der Wirbelschicht kann es sich um eine sogenannte stationäre Wirbelschicht handeln, bei denen die Schicht aus den fluidisierte Partikeln eine deutliche obere Grenze besitzt und aus der nur sehr wenige (feine) Partikel ausgetragen werden. Schwerkraft und Auftrieb halten sich die Waage. Alternativ kann es sich bei der Wirbelschicht aber auch um eine sogenannte zirkulierende Wirbelschicht handeln, bei der die Schicht aus den fluidisierte Partikeln aufgrund einer größeren Strömungsgeschwindigkeit des Trägergases keine deutliche obere Grenze mehr besitzt und Partikel in großem Maße nach oben ausgetragen werden. Diese können wieder zurückfallen oder sie werden rezirkuliert.

Als Trägergas kann im einfachsten Fall Luft dienen, in bevorzugten Ausführungsformen können aber auch sauerstofffreie Inertgase wie beispielsweise Stickstoff zum Einsatz kommen. In der Regel strömt das Trägergas unter Druck in der Auftriebszone von unten nach oben. Als Auftriebszone kann in dem Reaktor beispielsweise ein senkrecht angeordnetes Rohr angeordnet sein.

Das zu amorphem Kohlenstoff pyrolisierbare Polymer oder ein entsprechender Polymervorläufer (Komponente 1) und die Siliziumpartikel (Komponente 2) werden als Lösung oder Suspension in den Wirbelschichtreaktor eingespeist, insbesondere in fein verteilter Form. Gleiches gilt gegebenenfalls auch für den Leitruß. Die entsprechende Suspension oder Lösung kann hierzu beispielsweise mittels einer Düse in Form eines feinen Sprühnebels in den Reaktor eingeblasen oder eingesprüht werden.

Wenn ein Polymervorläufer zum Einsatz kommt, so wird diesem bevorzugt ein Härter zugesetzt. Bei dem Härter handelt es sich im Fall der Verwendung von Epoxidharzen als Komponente 3 bevorzugt um einen Aminhärter. Auch derartige Härter für Epoxidharze sind dem Fachmann bekannt und bedürfen im Rahmen der vorliegenden Anmeldung keiner weiteren Erläuterung. Besonders bevorzugt wird als Aminhärter 3-(Dimethylamino)-1-Propylamin verwendet.

Die Zugabe der Komponenten 2 und 3, gegebenenfalls auch 4, kann sowohl gleichzeitig als auch hinter- oder nebeneinander erfolgen. Beispielsweise kann eine Lösung bzw. Suspension eingespeist werden, die alle Komponenten 1 bis 3 oder zumindest zwei dieser Komponenten enthält. Alternativ können separat voneinander auch z.B. eine Lösung von Komponente 3, eine Suspension von Komponenten 1 und gegebenenfalls eine Suspension von Komponente 4 - gleichzeitig oder nacheinander - zum Einsatz kommen.

Es hat sich gezeigt, dass es von besonderem Vorteil ist, zur Herstellung einer Lösung bzw. Suspension mit allen Komponenten 2 bis 4 die Komponente 3 in einem Lösungsmittel gelöst vorzulegen und in dieser Lösung anschließend die Komponenten 2 und gegebenenfalls 4 zu dispergieren. Dabei kann es sinnvoll sein, die Komponenten 2 und gegebenenfalls 4 ihrerseits bereits einer Vordispergierung in dem Lösungsmittel zu unterwerfen, also diese Komponenten in dispergierter Form der Lösung aus Komponente 3 und dem Lösungsmittel zuzusetzen. Als Lösungsmittel sind beispielsweise Alkohole wie 1-Methoxy-2-propanol geeignet, insbesondere im Fall von Epoxidharzen als Komponente 3.

Bevorzugt werden die Anteile der Komponenten 2 bis 4 in der Lösung bzw. Suspension wie folgt eingestellt:
- Der Anteil an Siliziumpartikeln wird bevorzugt auf einen Wert zwischen 0,5 Gew.-% und 10 Gew.-%, insbesondere auf einen Wert zwischen 1 Gew.-% und 5 Gew.-%, eingestellt.
- Der Anteil an Komponente 4 wird bevorzugt auf einen Wert zwischen 0 Gew.-% und 5 Gew.-%, insbesondere auf einen Wert zwischen 0 Gew.-% und 2 Gew.-%, eingestellt.
- Der Anteil an dem pyrolisierbaren Polymer oder Polymervorläufer wird bevorzugt auf einen Wert zwischen 0,5 Gew.-% und 10 Gew.-%, insbesondere auf einen Wert zwischen 1 Gew.-% und 5 Gew.-% eingestellt. Gegebenenfalls umfassen diese Angaben zwischen 0 Gew.-% und 1 Gew.-% eines Härters.

Die Gewichtsangaben beziehen sich dabei bevorzugt jeweils auf das Gesamtgewicht der Lösung bzw. Suspension, also auf die Summe aus den Gewichten der Komponenten 2 bis 4 sowie des Gewichts des Lösungs- bzw. Suspensionsmittels.

Bevorzugt wird in der Lösung oder Suspension enthaltenes Lösungs- oder Suspensionsmittel im Wirbelschichtreaktor verdunstet oder verdampft und aus dem Wirbelschichtreaktor ausgeschleust, vorzugsweise mit dem Trägergas. Hierzu kann die Temperatur des Trägergases und damit des Innenraums des Wirbelschichtreaktors auf einen Wert zwischen 20 °C und 60 °C eingestellt werden.

Das zu amorphem Kohlenstoff pyrolisierbare Polymer (oder ein entsprechender Polymervorläufer) und die Siliziumpartikel und/oder der Leitruß werden - insbesondere in Form der genannten Suspensionen oder Lösungen - bevorzugt direkt in die Auftriebszone des Wirbelschichtreaktors eingespeist, insbesondere unmittelbar unterhalb der Wirbelschicht oder unmittelbar in die Wirbelschicht.

In bevorzugten Ausführungsformen des erfindungsgemäßen Verfahrens werden Partikel aus der Wirbelschicht ausgeschleust und in eine Fallzone des Wirbelschichtreaktors überführt, in welcher ihre Schwerkraft größer ist als ihr Auftrieb. Dies ist insbesondere im Falle der bereits erwähnten zirkulierenden Wirbelschicht bevorzugt. Die Partikel können über die Fallzone rezirkuliert, also wieder in die Auftriebszone eingespeist werden. Alternativ können ausgeschleuste Partikel auch aus dem Reaktor abgeführt werden.

In besonders bevorzugten Ausführungsformen werden - bevorzugt kontinuierlich - Partikel aus der Wirbelschicht und damit aus der Auftriebszone ausgeschleust und zu einem Teil über die Fallzone wieder in die Auftriebszone rezirkuliert. Hierbei kann in Abhängigkeit des Gewichts der ausgeschleusten Partikel eine Filterung sowie eine Auftrennung der Partikel in zwei oder mehr Partikelfraktionen, beispielsweise eine erste Fraktion mit Partikeln unterhalb eines Gewichtsschwellenwerts und eine zweite Fraktion mit einem Gewicht oberhalb des Schwellenwerts, erfolgen. Da die eingesetzten Lithium interkalierenden Kohlenstoffpartikel zu Beginn des Beschichtungsvorgangs im Wirbelschichtreaktor bevorzugt eine weitestgehend einheitliche Größe, insbesondere innerhalb der oben genannten Grenzen, und folglich auch ein weitestgehend einheitliches Gewicht aufweisen, lässt das Gewicht der aus der Wirbelschicht ausgeschleusten Partikel in aller Regel einen Rückschluss auf das Stadium des Beschichtungsprozesses zu. Je schwerer ein Partikel ist, desto dicker ist in der Regel die Hülle aus dem Polymer sowie den Siliziumpartikeln, mit der es überzogen wurde.

Durch Festlegung des Gewichtsschwellenwerts lässt sich der Beschichtungsprozess bzw. die Dicke der Beschichtung steuern, was wiederum die Erstellung von Aktivmateriapartikeln mit "designbarer" Kapazität erlaubt. Erhöht man den Gewichtsschwellenwert, so erhöht dies im Mittel auch die Verweilzeit der Partikel im Wirbelschichtreaktor und damit auch die Dicke der entstehenden Polymerhülle. Dadurch lässt sich das Verhältnis C / Si in den Partikeln beeinflussen. Je dicker die Hülle, desto größer wird (im Verhältnis zu den kernbildenden Lithium interkalierenden Kohlenstoffpartikel) der Gewichtsanteil an Silizium in den Kompositpartikeln.

Vorliegend kann beispielsweise die genannte erste Partikelfraktion rezirkuliert werden, während die genannte zweite Partikelfraktion aus dem Reaktor abgeführt wird. Während der Beschichtungsprozess für die Partikel der ersten Fraktion noch nicht abgeschlossen ist, hat im Fall der Partikel der zweiten Fraktion die Hülle bereits die gewünschte Dicke.

Weitere mögliche Prozessparameter, über die sich der Beschichtungsprozess steuern lässt, sind die Geschwindigkeit des Trägergasstroms (beeinflussen ebenfalls die Verweilzeit der Partikel in der Wirbelschicht) sowie der Sprühdruck und damit die Geschwindigkeit, mit der die Komponenten 2 bis 4 in den Reaktor eingeblasen oder eingesprüht werden.

Bei der Wärmebehandlung in Schritt B werden die in Schritt A gewonnenen Partikel bevorzugt einer Temperatur zwischen 500 °C und 1100 °C ausgesetzt. Die exakte Temperatur ist primär abhängig von der stofflichen Beschaffenheit der Komponente 3. Bei Verwendung eines Epoxidharzes als Komponente 3 liegt die Temperatur bevorzugt im Bereich zwischen 600 °C und 1000 °C.

Überraschend wurde gefunden, dass die im Schritt A hergestellten Partikel auch bei Kontakt während des Pyrolyseschritts B nicht zur Bildung von Agglomeraten neigen. Auch aus Schritt B resultiert damit bevorzugt ein Pulver. Dies gilt meist sowohl dann, wenn die Wärmebehandlung analog zu Schritt A in einem Wirbelschichtreaktor erfolgt, als auch dann, wenn sie z.B. in einem Drehrohrofen durchgeführt wird. Hierzu kann das zu pyrolisierende Pulver in einem Pyrolyse-Wirbelschichtreaktor mittels eines aufwärts strömenden Trägergases in einen fluidisierten Zustand versetzt und den genannten Temperaturen ausgesetzt werden, bei denen sich die Komponente 3 zu amorphem Kohlenstoff zersetzt.

Gegebenenfalls kann es bevorzugt sein, die Wärmebehandlung in einer reduzierenden Atmosphäre oder zumindest einer nicht oxidierenden Atmosphäre vorzunehmen. Als vorteilhaft hat sich erwiesen, Luftsauerstoff bei der Behandlung so weit wie möglich auszuschließen. Beispielsweise kann die Behandlung unter Schutzgas erfolgen. So kann beispielsweise als Trägergas in dem Pyrolyse-Wirbelschichtreaktor Stickstoff eingesetzt werden.

Das nach dem erfindungsgemäßen Verfahren herstellbare Aktivmaterial eignet sich besonders für die negative Elektrode einer elektrochemischen Zelle, insbesondere einer Lithium-Ionen-Zelle. Entsprechend den obigen Ausführungen umfasst es Lithium interkalierende Kohlenstoffpartikel, deren Oberfläche hüllenartig mindestens teilweise mit einer Schicht aus amorphem Kohlenstoff bedeckt ist, in welche nanoskalige Siliziumpartikel mit einer bevorzugten mittleren Partikelgröße zwischen 30 nm und 300 nm eingebettet sind. Besonders bevorzugt besteht das Aktivmaterial aus solchen Partikeln.

Bevorzugt weist die Hülle der Partikel mindestens eine der folgenden Eigenschaften auf:
- Sie ist porös, weist insbesondere Poren mit einem mittleren Porendurchmesser von 10 bis 200 nm, besonders bevorzugt zwischen 50 und 150 nm, auf.
- Sie weist eine BET- Oberfläche zwischen 3 m²/g und 100 m²/g, bevorzugt zwischen 5 m²/g und 50 m²/g, insbesondere zwischen 8 m²/g und 30 m²/g, auf.

Die Porenverteilung ist bevorzugt monomodal.

Die genannten BET-Oberflächenwerte liegen überraschenderweise sehr deutlich unter den Werten, die für Silizium-Graphit-Kompositpartikel bestimmt wurden, welche durch klassische Prozesse wie z.B. den in der EP 2573845 A1 beschriebenen erhalten wurden. Die vergleichsweise geringe BET-Oberfläche hat sich als vorteilhaft erwiesen. Die in Verbindung mit der eingangs erwähnten SEI-Bildung verbundenen Lithium- und Elektrolytverluste fielen sehr viel geringer aus als erwartet.

In besonders bevorzugten Ausführungsformen können die Partikel auch neben der Hülle aus dem amorphen Kohlenstoff mit den darin eingelagerten Siliziumpartikeln mindestens eine diese umgebende weitere Hülle aufweisen. Es ist problemlos möglich, einem Pyrolyseschritt B einen zweiten Aufbauschritt A folgen zu lassen, bei dem an Stelle der Lithium interkalierenden Kohlenstoffpartikel aus Schritt B resultierende Partikel in die Auftriebszone des Wirbelschichtreaktors eingespeist werden. Deren Oberfläche kann nochmals mit dem (oder einem alternativen) zu amorphem Kohlenstoff pyrolisierbaren Polymer überzogen werden, das anschließend in einem zweiten Pyrolyseschritt B wieder zu amorphem Kohlenstoff zersetzt werden kann.

Das Aktivmaterial zeichnet sich durch eine sehr hohe Zyklenstabilität aus. Die amorphe Kohlenstoffschicht hemmt den Kontakt der Silizium-partikel und der Lithium interkalierenden Kohlenstoffpartikel mit dem Elektrolyten der Zellen und verhindert dadurch übergroße Verluste an Lithium, wie sie bei der eingangs beschriebenen SEI-Bildung auftreten können.

Das erfindungsgemäße Verfahren ermöglicht die sehr gleichmäßige Beschichtung der eingesetzten Lithium interkalierenden Kohlenstoffpartikel. In der Folge weisen - durchaus überraschend - nicht nur die die verwendeten Lithium interkalierenden Kohlenstoffpartikel (und gegebenenfalls die verwendeten Siliziumpartikel) eine weitestgehend einheitliche Größe auf, sondern in der Regel auch die aus Schritt B erhaltenen Partikel. Die Spanne der Partikelgrößenverteilung der aus Schritt B erhaltenen Partikel liegt bevorzugt gleichfalls zwischen 0,1 und 3, insbesondere zwischen 0,5 und 2,0, besonders bevorzugt zwischen 0,75 und 1,25. Dies kann sich im Hinblick auf eine möglichst gleichförmige Elektrodenbeladung und Elektrodenkinetik vorteilhaft auswirken.

Das Aktivmaterial kann mit einem Elektrodenbinder wie z.B. mit Natrium-carboxymethylzellulose und gegebenenfalls einem leitfähigkeitsverbesserndem Additiv zu einer Elektrode für Lithium-Ionen-Zellen, insbesondere eine negative Elektrode, weiterverarbeitet werden.

Das Aktivmaterial stellt eine Alternative zum herkömmlichen Anodenmaterial Graphit für Lithium-Ionen-Batterien dar. Durch die Kombination der strukturstabilen, vergleichsweise niederkapazitiven Lithium interkalierenden Kohlenstoffpartikeln mit dem hochkapazitiven nano-Silizium konnte ein außerordentlich strukturstabiles Anodenmaterial für Lithium-Ionen Batterien entwickelt werden. Durch den Kern/Hüllen Aufbau und die Anwendung von nano-Silizium bei dem vorliegendem Anodenmaterial konnte die Strukturlabilität während dem Laden/Entladen des Siliziums umgangen werden und somit konnte trotz der starken Volumen- und Strukturänderung während des Laden/Entladen bei Verwendung von Silizium ein strukturstabiles Anodenmaterial hergestelllt werden.

Weitere Merkmale der Erfindung ergeben sich auch aus der nun folgenden Beschreibung der Figuren sowie bevorzugter Ausführungsformen in Verbindung mit den abhängigen Ansprüchen. Hierbei können einzelne Merkmale jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keinster Weise einschränken zu verstehen.

### Ausführungsbeispiel

### Herstellung eines Aktivmaterials

Wie oben dargelegt, lässt sich das erfindungsgemäße Verfahren in zwei klar voneinander trennbare Prozessschritte, einen Aufbauschritt A und einen Pyrolyseschritt B, aufteilen.

Im Schritt A werden 28 g Graphitpartikel mit einer mittleren Partikelgröße zwischen 10 µm und 50 µm in die Auftriebszone eines Wirbelschichtreaktors (Labormaßstab, Reaktor Mini Glatt der Firma Glatt GmbH mit Sitz in Binzen, Deutschland) überführt und dort durch aufströmende Prozessdruckluft und unter Ausbildung einer Wirbelschicht in einen fluidisierten Zustand versetzt. Der Prozessluftdruck im Laborreaktor wird in der Regel auf einen Wert zwischen 0,02 und 0,2 bar (in Abhängigkeit der eingesetzten Partikel) eingestellt. Die Partikel werden anschließend mit einer Polymerhülle beschichtet, in welche Siliziumpartikel mit Partikelgrößen zwischen von 10 - 500 nm sowie Rußpartikel eingebettet sind. Hierzu wird eine Suspension aus einem Lösungsmittel, einem geeigneten Polymer, den Siliziumpartikeln und den Rußpartkeln in den Reaktor eingesprüht. Als Polymer eignen sich insbesondere Epoxidharze auf Basis von Bisphenol A und Epichlorhydrin. Eine typische, für die Beschichtung der angegebenen Menge Graphitpartikel ausreichende Lösung bzw. Suspension setzte sich aus den folgenden Komponenten zusammen:
- 240g 1-Methoxy-2-propanol (Lösungs- bzw. Suspensionsmittel)
- 8 g Epoxidharz Araldit® 506 (als pyrolisierbares Polymer)
- 2 g 3-Dimethylamino-propylamin (als Härter)
- 8 g Siliziumpartikel
- 4 g Ruß

Die Temperatur im Inneren des Wirbelschichtreaktors wird auf ca. 41°C eingestellt. Anschließend wird die Lösung bzw. Suspension mit einem Druck von ca. 1,3 bar durch eine Düse auf die Wirbelschicht aus den Graphitpartikeln gesprüht.

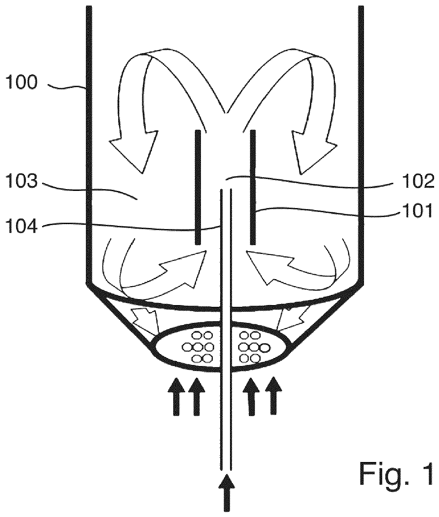

Der Ablauf des Beschichtungsprozesses ist in **Fig. 1** dargestellt. Der schematisch im Querschnitt dargestellte Wirbelschichtreaktor **100** weist ein senkrecht angeordnetes Steigrohr **101** auf, in dessen unteres Ende die Prozessdruckluft als Trägergas eingeströmt wird. Das Rohr **101** definiert eine Auftriebszone **102** innerhalb des Reaktors **100,** in der sich die Wirbelschicht aus den Graphitpartikeln ausbildet. Innerhalb des Reaktors **100** können die Partikel zirkulieren (Richtung durch Pfeile dargestellt). Bei entsprechender Einstellung der Strömungsgeschwindigkeit der Prozessdruckluft innerhalb des Rohres **101** können sie oben aus dem Rohr **101** austreten und eine Position erreichen, wo der durch die Prozessluftdruck bedingte Auftrieb der Partikel geringer ist als die auf sie wirkende Schwerkraft. Sie sinken in der Folge außerhalb des Rohres **101** durch eine Fallzone **103** ab, bis sie wieder von der ins untere Ende des Rohres **101** eintretenden Prozessdruckluft erfasst und in die Auftriebszone gezogen werden, welche sie erneut durchschreiten können, bis sie wieder in die Fallzone **103** gelangen.

Über die Zuführleitung **104** wird die Lösung bzw. Suspension zur Beschichtung der Graphitpartikel in die Auftriebszone **102** eingesprüht. Geeignet als Sprühverfahren sind z.B. das sogenannte Top- oder Bottom-Spray-Coating. Alternativ käme auch das sogenannte Tangential-Spray-Coating in Frage. Durch den dabei entstehenden Sprühnebel werden die Graphitpartikel in der Auftriebszone **102** oberflächlich benetzt. Bei der im Innenraum des Reaktors **100** vorherrschenden Temperatur setzt nahezu augenblicklich eine Verdunstung des in der Lösung bzw. Suspension enthaltenen Lösungs- bzw. Suspensionsmittels sowie ein An- bzw. Aushärten des auf den Partikeloberflächen abgeschiedenen pyrolisierbaren Polymers ein. Durch geeignete (nicht zu niedrige) Einstellung der Strömungsgeschwindigkeit der Prozessdruckluft innerhalb des Rohres **101** wird dabei einer Partikelagglomeration vorgebeugt.

Die Benetzung der Partikel in der Auftriebszone **102** wiederholt sich in der Folge bei jedem weiteren Durchschreiten derselben. Entsprechend wächst nach und nach die Dicke der sich auf den Partikeloberflächen bildenden Polymerhülle. Damit einhergehend nimmt auch das Gewicht der beschichteten Graphitpartikel nach und nach zu. Überschreitet ihr Gewicht einen bestimmten Schwellenwert, so werden sie nicht mehr von der Prozessdruckluft erfasst und in die Auftriebszone **102** gezogen. Stattdessen können sie sich am Boden des Reaktors **100** sammeln.

Die Verweilzeit der Partikel in der der Auftriebszone **102** und damit letztendlich der Aufbau des Graphitpartikels lässt sich beispielsweise durch Einstellung des Prozessluftdruckes und Wahl einer geeigneten Reaktorgeometrie steuren. Wie erwähnt, stellt dies eine Möglichkeit dar, die Kapazität des herzustellenden Aktivmaterials gezielt einzustellen.

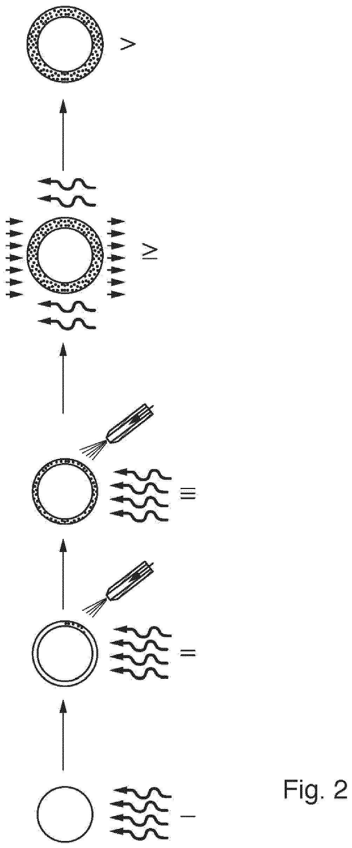

Detailliert erläutern lässt sich der Ablauf des erfindungsgemäßen Verfahrens auch anhand der schematischen Darstellung in **Fig. 2****.**

Zunächst werden Graphitpartikel durch einen Trägergasstrom in die Schwebe gebracht (**I**). Danach wird damit begonnen, die im Trägergasstrom schwebenden Graphitpartikel mittels einer Beschichtungslösung, wie sie oben beschrieben wurde, zu ummanteln (**II**). Die Beschichtungslösung wird in Form eines Spühnebels mit den schwebenden Partikeln kontaktiert. Auf der Oberfläche der Partikel härtet das in der Beschichtungslösung enthaltene Polymer aus und bildet eine Polymerhülle aus, in die Siliziumpartikel eingebettet sind. Die Hüllbildung setzt sich in (**III**) fort, die Dicke der Hülle nimmt zu. Mit zunehmender Hülldicke nimmt auch das Gewicht der Partikel zu. Wird ein Schwellenwert überschritten, so wird die auf die Partikel wirkende Schwerkraft nicht mehr durch den durch den Trägergasstrom verursachten Auftrieb kompensiert (**IV**). Die Partikel fallen oder werden gezielt abgetrennt. Danach erfolgt eine pyrolytische Zersetzung der gebildeten Polymerhülle. Es resultieren Partikel mit einem Graphtikern, der von einer Hülle aus amorphem Kohlenstoff ummantelt ist, in welche Siliziumpartikel eingebettet sind (**V**).

Im Zuge des beschriebenen Prozesses wird ein pulverförmiges Komposit erhalten, welches in einem darauffolgenden Pyrolyseschritt B durch Erhitzen auf 900°C für 2h in sauerstoffreier Atmosphäre zersetzt wird. So erhaltene Si/C-Kompositpartikel enthalten beispielsweise 63 Gewichtsteile Graphit, 18 Gewichtsteile Silizium und 9 Gewichtsteile amorphen Kohlenstoff.

Charakterisierung von erfindungsgemäßen Aktivmaterialien

Gemäß dem beschriebenen Prozess wurden mehrere Aktivmaterialvarianten hergestellt, welche sich in ihrer Kapazität unterschieden. Hierzu waren Graphitpartikel mit unterschiedlich dicken Polymer-Hüllen versehen worden. Je dicker die Hülle, desto mehr Silizium enthielten die beschichteten Partikel und damit das jeweilige Aktivmaterial. Hergestellt wurden Aktivmaterielien mit einem Anteil an Silizum von 2,5, 5, 10 und 20 Gewichtsteilen Silizium.

Zur elektrochemischen Charakterisierung wurden die erhaltene Aktivmaterialien zu Elektroden verarbeitet. Hierzu wurden die Aktivmaterialien zu wässrigen Pasten verarbeitet, welche neben den Aktivmaterialien Natriumcarboxymethylzellulose als Binder und Leitruß im Gewichtsverhältnis 88 : 7 : 5 enthielt. Die Paste wurde auf einen Kupferableiter aufgebracht und getrocknet, gefolgt von einem Kalandrierschritt.

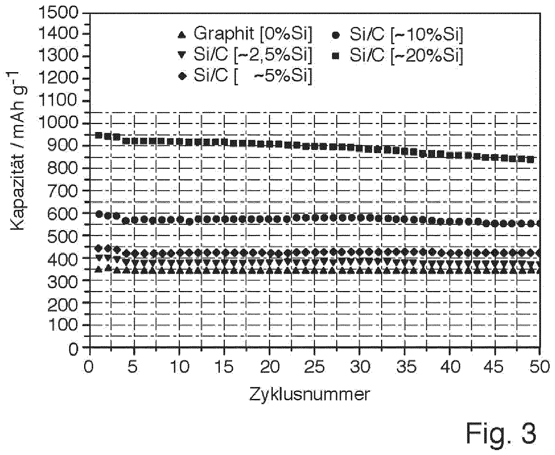

Die Ergebnisse der Zyklisierungsuntersuchungen mit den so hergestellten Elektroden sind in **Fig. 3** dargestellt.

Die Oberfläche der Partikel ist von besonderem Interesse, da im Rahmen der Verwendung als Anodenmaterial in Lithium Ionen Batterien die Partikel gegenüber dem Elektrolyten zumindest partiell exponiert werden und der Elektrolyt beim vorherrschenden Potential der Lithiumaufnahme elektrochemisch instabil ist. Dementsprechend wird reduktiv eine Deckschicht geschaffen, welche nachteiligen Lithium und Elektrolytverlust bedingt. Dementsprechend ist eine möglichst geringe spezifische Oberfläche insbesondere bei der Verwendung von nanoskaligem Silizium erstrebenswert. Es wurde gefunden, dass sich das Verfahren eignet mittels Prozessparameter und Sprühzusätzen die BET Oberfläche zu steuern. Bei Untersuchungen der aus dem Prozess resultierenden Silizium/Graphit-Kompositpartikel wurde gefunden, dass BET Oberflächen realisiert werden können, welche zwischen 3 m²/g und 100 m²/g betragen. Meist wurden BET Oberflächen von 5 m²/g bis 50 m²/g und besonders bevorzugt von 8 m²/g bis 30 m²/g erhalten.

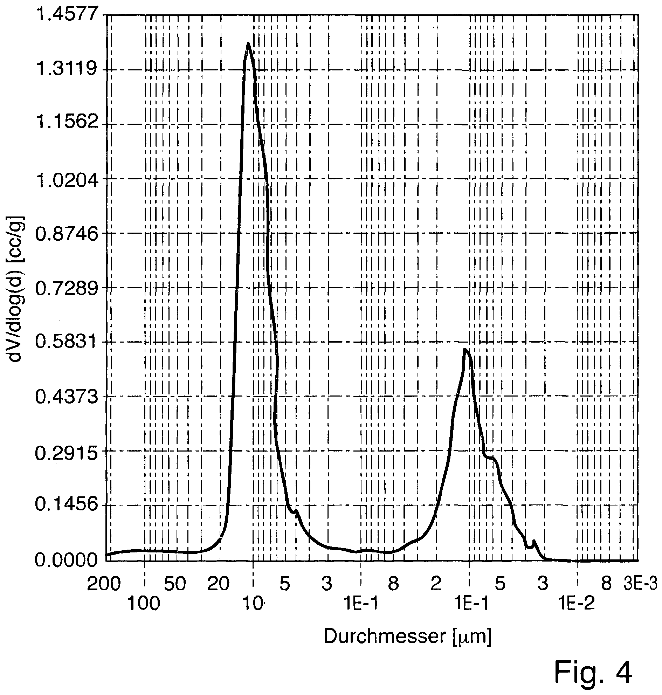

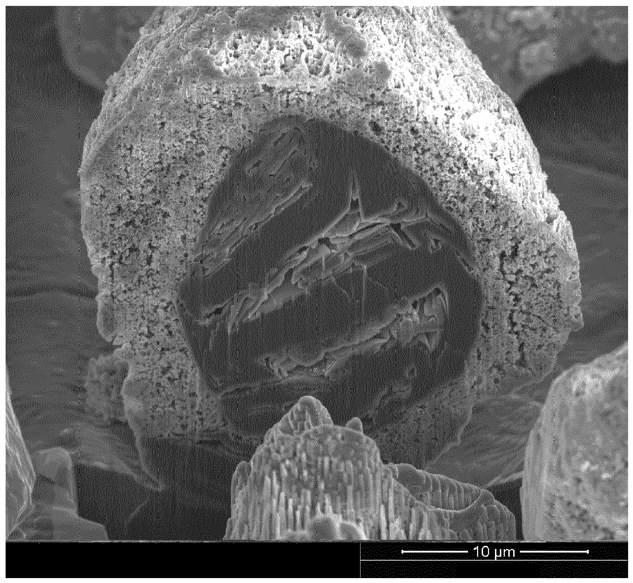

Die hergestellen Aktivmaterialien wurden einer Quecksilberporosimetrie-Untersuchung (gemessen wurde an einem QUANTACHROME Poremaster 60-GT) zwecks Ermittlung der Porengrößenverteilung unterzogen. Hierbei ergab sich, dass die untersuchten Materialien eine mittlere Porengröße zwischen 80 nm und 120 nm aufwiesen. Eine typische Porenverteilung ist in **Fig. 4** dargestellt (Achtung: Der Peak bei 10 µm beschreibt die Kornzwischenräume, nur der Peak im Sub-Micrometerbereich repräsentiert die Poren), einer der untersuchten Partikel in **Fig. 5****.** Hierbei handelt es sich um einen mittels Focused Ion Beam (FIB) mittig durchgeschnittenen Partikel. Deutlich zu erkennen ist der (dunklere) Graphitkern sowie die diesen umgebende (hellere) Hülle aus amorphem Kohlenstoff mit darin eingelagerten Siliziumpartikeln.

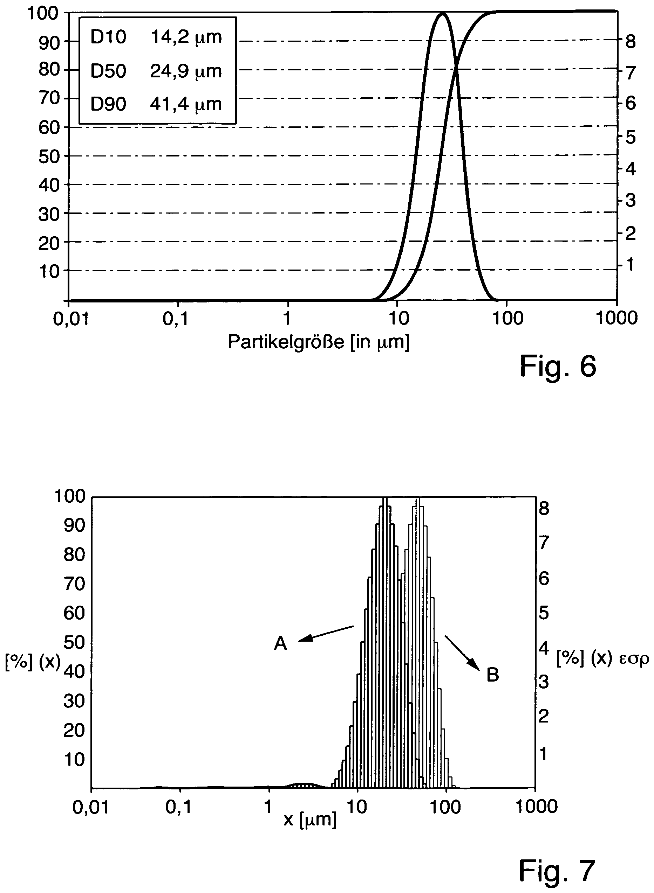

Das erfindungsgemäße Verfahren erlaubt eine Separation der Partikel nach Größe und Gewicht. Des Weiteren erlaubt das Verfahren den Ausschluss von Agglomeraten. Entsprechend werden in der Regel sehr homogene Partikelgrößenverteilungen erhalten. Beispiele hierfür findet sich in **Fig. 6** und **Fig. 7** (Fig. 7 zeigt einen Vergleich zwischen zwei Partikelgrößenverteilungen, nämlich der Größenverteilung der in Schritt A eingesetzten Kohlenstoffpartikel und der aus Schritt B erhaltenen Partikel).

## Patentansprüche

1. Verfahren zur Herstellung von Aktivmaterial für eine Elektrode einer elektrochemischen Zelle, umfassend
• einen **Aufbauschritt A**, in dem ein pulverförmiges Komposit aus Lithium interkalierenden Kohlenstoffpartikeln als Komponente 1, Siliziumpartikeln als Komponente 2 und einem zu amorphem Kohlenstoff pyrolisierbaren Polymer als Komponente 3 gebildet wird, sowie
• einen **Pyrolyseschritt B,** in dem das Komposit unter Ausschluss von Luftsauerstoff bei einer Temperatur wärmebehandelt wird, bei der sich das pyrolisierbare Polymer unter Bildung von amorphem Kohlenstoff zersetzt,
wobei zur unmittelbaren Bildung des pulverförmigen Komposits die Lithium interkalierenden Kohlenstoffpartikel in dem Aufbauschritt in einen Wirbelschichtreaktor (100) überführt und in diesem mit einer Hülle aus dem Polymer sowie den Siliziumpartikeln überzogen werden, wobei
• das zu amorphem Kohlenstoff pyrolisierbare Polymer oder ein entsprechender Polymervorläufer
und
• die Siliziumpartikel
als Lösung oder Suspension in den Wirbelschichtreaktor (100) eingespeist werden.

2. Verfahren nach Anspruch 1, wobei die Komponenten 1 bis 3 mindestens eines der folgenden bevorzugten Merkmale aufweisen:
• Die Lithium interkalierenden Kohlenstoffpartikel weisen eine mittlere Partikelgröße zwischen 3 µm und 60 µm auf,
• Die Spanne der Partikelgrößenverteilung der Lithium interkalierenden Kohlenstoffpartikel liegt bevorzugt zwischen 0,1 und 3, insbesondere zwischen 0,5 und 2,0, besonders bevorzugt zwischen 0,75 und 1,25,
• Die Siliziumpartikel weisen eine mittlere Partikelgröße zwischen 30 nm und 300 nm auf,
• Die Spanne der Partikelgrößenverteilung der Siliziumpartikel liegt bevorzugt zwischen 0,1 und 3, insbesondere zwischen 0,5 und 2,0,
• Das zu amorphem Kohlenstoff pyrolisierbare Polymer ist ausgewählt aus der Gruppe mit Epoxidharz, Polyurethanharz und Polyesterharz.

3. Verfahren nach einem der vorhergehenden Ansprüche, **dadurch gekennzeichnet, dass** zur Herstellung des pulverförmigen Komposits die Lithium interkalierenden Kohlenstoffpartikel in eine Auftriebszone (102) des Wirbelschichtreaktors (100) eingespeist werden, wo sie mittels eines aufwärts strömenden Trägergases in einen fluidisierten Zustand versetzt werden und eine Wirbelschicht bilden.

4. Verfahren nach einem der vorhergehenden Ansprüche, **dadurch gekennzeichnet, dass** Leitruß, Graphene und/oder CNTs als Komponente 4 als Lösung oder Suspension in den Wirbelschichtreaktor (100) eingespeist wird, insbesondere in fein verteilter Form.

5. Verfahren nach einem der vorhergehenden Ansprüche, **dadurch gekennzeichnet, dass** das zu amorphem Kohlenstoff pyrolisierbare Polymer oder der entsprechende Polymervorläufer und die Siliziumpartikel in die Auftriebszone (102) des Wirbelschichtreaktors (100) eingespeist werden, insbesondere unmittelbar unterhalb der Wirbelschicht oder unmittelbar in die Wirbelschicht.

6. Verfahren nach einem der Ansprüche 4 oder 5, **dadurch gekennzeichnet, dass** der Leitruß, das Graphene und/oder die CNTs als Komponente 4 in die Auftriebszone (102) des Wirbelschichtreaktors (100) eingespeist werden, insbesondere unmittelbar unterhalb der Wirbelschicht oder unmittelbar in die Wirbelschicht.

7. Verfahren nach einem der Ansprüche 3 bis 6, **dadurch gekennzeichnet, dass** Partikel aus der Wirbelschicht ausgeschleust und in eine Fallzone (103) des Wirbelschichtreaktors (100) überführt werden, in welcher ihre Schwerkraft größer ist als ihr Auftrieb.

8. Verfahren nach Anspruch 7, **dadurch gekennzeichnet, dass** die aus der Wirbelschicht ausgeschleusten Partikel über die Fallzone (103) aus dem Reaktor (100) abgeführt und/oder wieder in die Auftriebszone (102) eingespeist werden.

9. Verfahren nach einem der vorhergehenden Ansprüche, **dadurch gekennzeichnet, dass** das Massenverhältnis C / Si in den Partikeln und somit die Kapazität des entstehenden Aktivmaterials über die Verweilzeit der Partikel im Wirbelschichtreaktor (100) gesteuert wird.

10. Verfahren nach Anspruch 9, **dadurch gekennzeichnet, dass** die Verweilzeit durch Einstellung der Strömungsgeschwindigkeit des aufwärts strömenden Trägergases eingestellt wird.

## Claims

1. Process for producing active material for an electrode of an electrochemical cell, which comprises
• a buildup step A in which a pulverulent composite composed of lithium-intercalating carbon particles as component 1, silicon particles as component 2 and a polymer, as component 3, which can be pyrolyzed to form amorphous carbon is formed, and
• a pyrolysis step B in which the composite is heat treated in the absence of atmospheric oxygen at a temperature at which the pyrolyzable polymer decomposes to form amorphous carbon, wherein the lithium-intercalating carbon particles are transferred in the buildup step into a fluidized-bed reactor (100) and coated in this with a shell composed of the polymer and the silicon particles in order to effect direct formation of the pulverulent composite, and
• the polymer which can be pyrolyzed to form amorphous carbon or a corresponding polymer precursor
and
• the silicon particles
are fed as solution or suspension into the fluidized-bed reactor (100).

2. Process according to Claim 1, wherein the components 1 to 3 have at least one of the following preferred features:
• the lithium-intercalating carbon particles have an average particle size of from 3 µm to 60 µm,
• the spread of the particle size distribution of the lithium-intercalating carbon particles is preferably from 0.1 to 3, in particular from 0.5 to 2.0, particularly preferably from 0.75 to 1.25,
• the silicon particles have an average particle size of from 30 nm to 300 nm,
• the spread of the particle size distribution of the silicon particles is preferably from 0.1 to 3, in particular from 0.5 to 2.0,
• the polymer which can be pyrolyzed to form amorphous carbon is selected from the group consisting of epoxy resin, polyurethane resin and polyester resin.

3. Process according to either of the preceding claims, **characterized in that**, to produce the pulverulent composite, the lithium-intercalating carbon particles are fed into an uplift zone (102) of the fluidized-bed reactor (100) where they are brought by means of an upward-flowing carrier gas into a fluidized state and form a fluidized bed.

4. Process according to any of the preceding claims, **characterized in that** conductive carbon black, graphenes and/or CNTs, as component 4, are fed as solution or suspension into the fluidized-bed reactor (100), in particular in finely divided form.

5. Process according to any of the preceding claims, **characterized in that** the polymer which can be pyrolyzed to form amorphous carbon or the corresponding polymer precursor and the silicon particles are fed into the uplift zone (102) of the fluidized-bed reactor (100), in particular directly below the fluidized bed or directly into the fluidized bed.

6. Process according to either of Claims 4 and 5, **characterized in that** the conductive carbon black, the graphene and/or the CNTs, as component 4, are fed into the uplift zone (102) of the fluidized-bed reactor (100), in particular directly below the fluidized bed or directly into the fluidized bed.

7. Process according to any of Claims 3 to 6, **characterized in that** particles are discharged from the fluidized bed and transferred into a settling zone (103) of the fluidized-bed reactor (100) in which the force of gravity acting on them is greater than the uplift force they experience.

8. Process according to Claim 7, **characterized in that** the particles discharged from the fluidized bed are conveyed out of the reactor (100) and/or fed back into the uplift zone (102) via the settling zone (103).

9. Process according to any of the preceding claims, **characterized in that** the mass ratio C/Si in the particles and thus the capacity of the active material formed is controlled via the residence time of the particles in the fluidized-bed reactor (100).

10. Process according to Claim 9, **characterized in that** the residence time is set by setting the flow velocity of the upward-flowing carrier gas.

## Revendications

1. Procédé de production d'un matériau actif pour une électrode d'une cellule électrochimique, comprenant
• une étape de construction A, dans laquelle on forme un composite pulvérulent à partir de particules de carbone à intercalation de lithium comme composant 1, de particules de silicium comme composant 2 et d'un polymère pyrolysable en carbone amorphe comme composant 3, ainsi que
• une étape de pyrolyse B, dans laquelle on traite thermiquement le composite à l'abri de l'oxygène de l'air, à une température à laquelle le polymère pyrolysable se décompose en formant du carbone amorphe,
dans lequel, pour la formation immédiate du composite pulvérulent, on transfère les particules de carbone à intercalation de lithium dans l'étape de construction dans un réacteur à lit fluidisé (100) et on les enrobe dans celui-ci avec une gaine composée du polymère ainsi que des particules de silicium, dans lequel on charge
• le polymère pyrolysable en carbone amorphe ou un précurseur polymère correspondant
et
• les particules de silicium
sous forme de solution ou de suspension dans le réacteur à lit fluidisé (100).

2. Procédé selon la revendication 1, dans lequel les composants 1 à 3 présentent au moins une des caractéristiques préférées suivantes:
• les particules de carbone à intercalation de lithium présentent une taille de particules moyenne comprise entre 3 µm et 60 µm,
• la plage de distribution de la taille de particules des particules de carbone à intercalation de lithium se situe de préférence entre 0,1 et 3, en particulier entre 0,5 et 2,0, et de préférence encore entre 0,75 et 1,25,
• les particules de silicium présentent une taille de particules moyenne comprise entre 30 nm et 300 nm,
• la plage de distribution de la taille de particules des particules de silicium se situe de préférence entre 0,1 et 3, en particulier entre 0,5 et 2,0,
• le polymère pyrolysable en carbone amorphe est sélectionné dans le groupe comprenant la résine époxy, la résine de polyuréthane et la résine de polyester.

3. Procédé selon l'une quelconque des revendications précédentes, **caractérisé en ce que** pour la production du composite pulvérulent on charge les particules de carbone à intercalation de lithium dans une zone ascensionnelle (102) du réacteur à lit fluidisé (100), où elles sont portées à l'état fluidisé au moyen d'un gaz porteur s'écoulant vers le haut et elles forment un lit fluidisé.

4. Procédé selon l'une quelconque des revendications précédentes, **caractérisé en ce que** l'on charge du noir de carbone conducteur, du graphène et/ou des CNT en tant que composant 4 sous forme de solution ou de suspension dans le réacteur à lit fluidisé (100), en particulier sous forme finement divisée.

5. Procédé selon l'une quelconque des revendications précédentes, **caractérisé en ce que** l'on charge le polymère pyrolysable en carbone amorphe ou le précurseur polymère correspondant et les particules de silicium dans la zone ascensionnelle (102) du réacteur à lit fluidisé (100), en particulier immédiatement en dessous du lit fluidisé ou directement dans le lit fluidisé.

6. Procédé selon l'une des revendications 4 ou 5, **caractérisé en ce que** l'on charge le noir de carbone conducteur, le graphène et/ou les CNT en tant que composant 4 dans la zone ascensionnelle (102) du réacteur à lit fluidisé (100), en particulier immédiatement en dessous du lit fluidisé ou directement dans le lit fluidisé.

7. Procédé selon l'une quelconque des revendications 3 à 6, **caractérisé en ce que** l'on éjecte des particules hors du lit fluidisé et on les transfère dans une zone de chute (103) du réacteur à lit fluidisé (100), dans laquelle leur gravité est supérieure à leur entraînement ascensionnel.

8. Procédé selon la revendication 7, **caractérisé en ce que** l'on évacue les particules éjectées du lit fluidisé hors du réacteur (100) via la zone de chute (103) et/ou on les charge de nouveau dans la zone ascensionnelle (102).

9. Procédé selon l'une quelconque des revendications précédentes, **caractérisé en ce que** l'on commande le rapport des masses C/Si dans les particules et de ce fait la capacité du matériau actif obtenu au moyen du temps de résidence des particules dans le réacteur à lit fluidisé (100).

10. Procédé selon la revendication 9, **caractérisé en ce que** l'on règle le temps de résidence par le réglage de la vitesse d'écoulement du gaz porteur s'écoulant vers le haut.
